# EUROPÄISCHE PATENTSCHRIFT

(11) **EP 0 755 814 B1**
(45) Veröffentlichungstag und Bekanntmachung des Hinweises auf die Patenterteilung: **11.11.1998**
(21) Anmeldenummer: 96105161.2
(22) Anmeldetag: 30.03.1996
(51) Int. Cl.: B60J 3/02

(54) **Gegenlagerböckchen für eine Fahrzeugsonnenblende**
Counter bearing support for a vehicle sun visor
Contre-support pour pare-soleil de véhicule

(30) Priorität: 27.07.1995 DE 19527431
(43) Veröffentlichungstag der Anmeldung: 29.01.1997
(73) Patentinhaber: BECKER GROUP EUROPE GmbH, 42285 Wuppertal (DE)
(72) Erfinder: Welter, Patrick, 57730 Lachambre (FR)

(56) Entgegenhaltungen:
- DE-A- 4 028 939
- DE-C- 938 894
- FR-A- 2 469 307
- GB-A- 2 086 468

## Beschreibung

Die Erfindung bezieht sich auf ein Gegenlagerböckchen für eine Fahrzeugsonnenblende der im Oberbegriff der Ansprüche 1 und 6 naher erläuterten Art. Solche Gegenlagerböckchen sind der DE-C 938 894 als bekannt zu entnehmen.

Derartige Gegenlagerböckchen dienen für Sonnenblenden, die sowohl klappbar vor der Windschutzscheibe von Fahrzeugen gelagert sind, als auch über ein Schwenklager zur Seitenscheibe hin verschwenkt werden können. Sie werden als Gegenlagerböckchen bezeichnet, weil sie die Sonnenblende an den dem Schwenklager abgewandten Endbereich lagern und abstützen, wenn sich der Sonnenblendenkörper vor der Windschutzscheibe befindet.

Bei einem bekannten Gegenlagerböckchen nach der DE 28 03 731 A1 ist vorgesehen, daß der der Anlageebene benachbarte Arm federelastisch in Richtung zur Anlageebene verschwenkbar ist. Hierdurch wird ein Herausziehen und Einstecken des Gegenlagerstifts aus der bzw. in die Lageröffnung erleichtert. Diese Verhältnisse liegen auch bei einem durch die DE 40 28 939 C1 bekannt gewordenen Gegenlagerböckchen vor. Bei diesem bekannten Gegenlagerböckchen besteht einer der einen Gegenlagerstift klemmend zwischen sich aufnehmenden Arme aus gebogenen Blattfedern, die gleichzeitig als Kontaktfedern zur Stromzuführung für einen im Sonnenblendenkörper integrierten elektrischen Verbraucher dienen.

Der vorliegenden Erfindung liegt nun die Aufgabe zugrunde, ein Gegenlagerböckchen der eingangs genannten Art derart weiterzubilden, daß es bei vergleichsweise einfacher und kostengünstiger Herstellbarkeit nicht nur einen Gegenlagerstift vibrationsfrei zu halten vermag und zu gewährleisten, daß der Gegenlagerstift mühelos aus der Lageröffnung herausgezogen und in diese wieder eingesteckt werden kann, sondern darüber hinaus im Zusammenwirken mit dem Gegenlagerstift eine Rastfunktion zu übernehmen vermag, um den Sonnenblendenkörper zumindest in seiner am Dachhimmel anliegenden Nichtgebrauchslage zu halten.

Diese Aufgabe wird erfindungsgemäß durch die in den Ansprüchen 1 und 6 angegebenen Maßnahmen gelöst.

Durch die erfindungsgemäßen Maßnahmen ist die beim Stand der Technik stets den Schwenklagern zugeordnete Rastfunktion (vgl. z. B. DE 15 55 851, DE 25 51 633 B1 und GB 2 086 468 A) auf das Gegenlagerböckchen übertragen worden, was die Herstellung einer Sonnenblende wesentlich vereinfacht, insbesondere aber auch des Receyclen einer Sonnenblende begünstigt, weil nun nicht mehr die für eine Rastfunktion vorgesehenen Stahlfedern mühsam aus dem Sonnenblendenkörper herausgepult werden müssen, bevor der Sonnenblendenkörper einem Schredder oder dgl. zugeführt wird. Das erfindungsgemäße Gegenlagerböckchen besteht im wesentlichen aus einem aus Federstahlblech gebildeten Funktionskörper, der sich als Massenartikel einfach und kostengünstig herstellen läßt. Dem Gehäuse kommt mehr die Aufgabe eines Verkleidungskörpers zu, obgleich nicht verkannt werden darf, daß es aus Gründen des Unfallschutzes zwingend erforderlich ist, die Enden, Ecken und Kanten des Funktionskörpers durch einen Schutzkörper zu umhüllen. Zur Erfindung gehört aber auch gemäß Anspruch 6 die besondere Ausbildung des Gegenlagerstifts im Gegenlagerbereich, in dem dieser einen von den Armen umgriffenen Axialbereich mit einer unrunden Ausbildung aufweist.

Vorteilhafte Weiterbildungen und zweckmäßige Ausgestaltungen der Erfindung sind in den Unteransprüchen angegeben.

Ein Ausführungsbeispiel der Erfindung wird im folgenden anhand der Zeichnungen näher erläutert, und es zeigen:
- Fig. 1: eine komplette Sonnenblende in Ansicht,

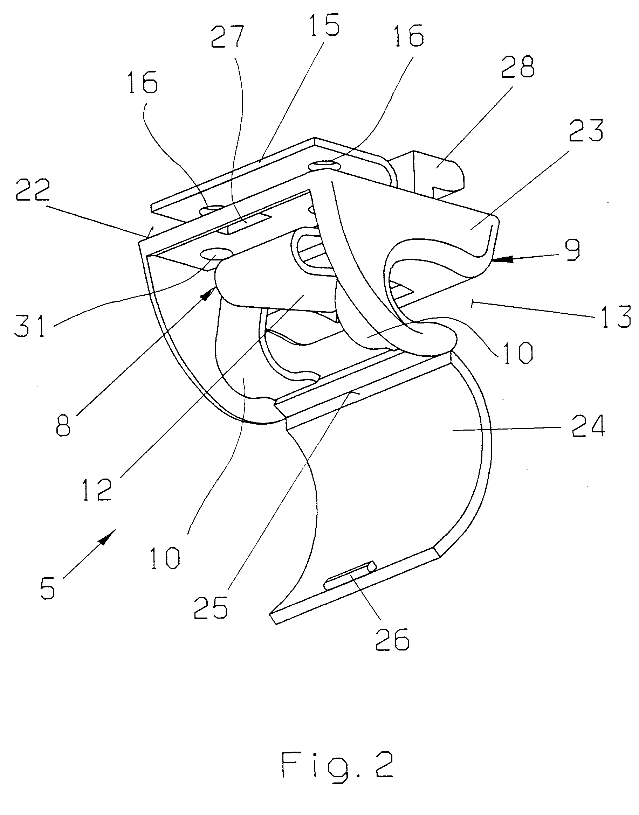

- Fig. 2: eine schaubildliche Ansicht des Gegenlagerböckchens,
- Fig. 3: einen Schnitt durch das Gegenlagerböckchen nach Fig. 2 im montierten Zustand und
- Fig. 4: eine schaubildliche Ansicht des Funktionskörpers des Gegenlagerböckchens mit dem Abschnitt eines Gegenlagerzapfens.

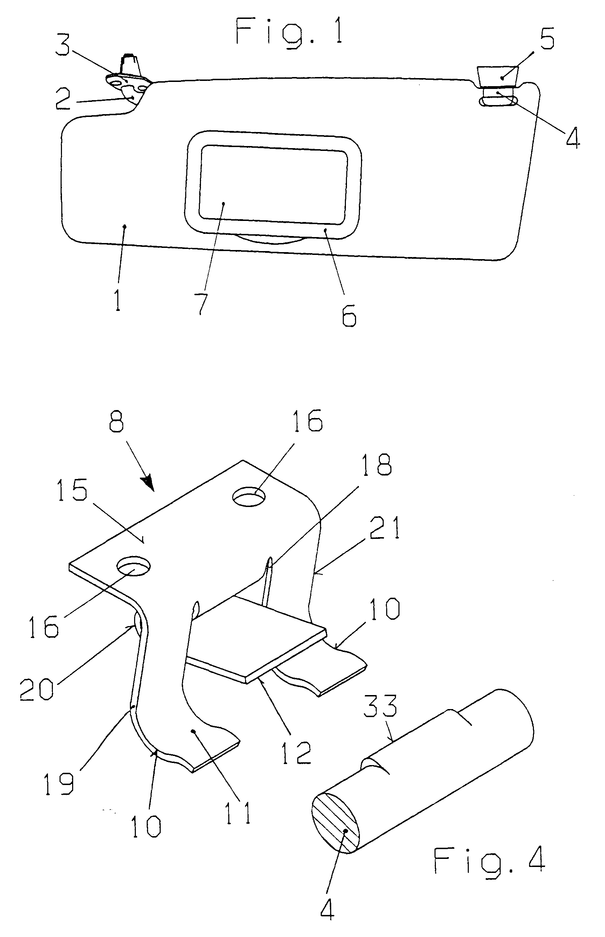

Die in Fig. 1 gezeigte Sonnenblende weist einen Sonnenblendenkörper 1 auf, der als relativ dünne Platte mit etwa rechteckiger Kontur ausgebildet ist. In das zeichnungslinksseitige Stirnende des Sonnenblendenkörpers 1 greift eine L-förmige Sonnenblendenachse 2 mit einem Schenkel ein, während der andere Schenkel schwenkbeweglich in einem an der Fahrzeugkarosserie zu befestigenden Schwenklagerböckchen 3 sitzt. Zur Sonnenblendenachse 2 gehört auch ein Gegenlagerstift 4, der lösbar in ein an der Fahrzeugkarosserie zu befestigendes Gegenlagerböckchen 5 einrastbar ist. In einer Ausnehmung des Sonnenblendenkörpers 1 kann eine Spiegelbaueinheit angeordnet sein, von der ein Spiegelrahmen 6 und ein den Spiegel bei Nichtgebrauch abdeckender Klappdeckel 7 zu erkennen ist.

Das Gegenlagerböckchen 5 besteht aus zwei Teilen, nämlich einem Funktionskörper 8 und einem Gehäuse 9. Der Funktionskörper 8 ist aus einem Federstahlblech gebildet, und weist alle für die Lagerung eines Gegenlagerstifts 4 erforderlichen Funktionselemente auf. Die den Gegenlagerstift 4 klammerartig umgreifenden Arme werden durch zwei äußere, auf einer ersten Ebene liegende Federschenkel 10 mit hohlrunden Lageraufnahmen 11 und einem dazwischen angeordneten, auf einer zweiten Ebene liegenden Federschenkel 12 gebildet. Die einander zugewandten Seiten der einander beabstandeten Federschenkel 10 und 12 bilden also eine hinterschnittene Lageröffnung für den Gegenlagerstift 4 und einen dessen wiederholtes Einstecken ermöglichenden elastisch aufspreizbaren Einführschlitz 13. Die freien Enden der Federschenkel 10 sind nach unten abgebogen, um den Einlauf des Einführschlitzes 13 zu vergrößern.

Der Funktionskörper 8 weist einen an der Fahrzeugkarosserie, wie dem Dachblech 14 zur Anlage kommenden Flansch 15 auf, in dem sich zwei Bohrungen 16 für Befestigungselemente 17 befinden. Von dem Flansch 15 gehen drei durch Freischnitte 18 gebildete Stege 19, 20, 21 aus, die an ihren freien Enden die darin abgewinkelten Federschenkel 10 und 12 tragen. In Seitenansicht gesehen, weist der Funktionskörper 8 eine Z-Form auf. Dabei ähnelt der mittlere Steg 20 eher einem Etagenbogen bzw. einem Fragezeichen.

Das Gehäuse 9 ist als hohles Kunststoff-Spritzgußteil ausgebildet und weist eine Grundplatte 22 und einen Gehäusekörper 23 auf. Der Gehäusekörper 23 ist vorderseitig zum Einführen des Gegenlagerstifts 4 geöffnet und weiterhin auch auf der gesamten Rückseite, um durch diese rückseitige Öffnung hindurch den Funktionskörper 8 einsetzen zu können. Die rückseitige Gehäuseöffnung ist durch einen Deckel 24 verschließbar, der vorzugsweise über ein Filmscharnier 25 einstückig am Gehäusekörper 23 angespritzt ist. Am freien Ende des Deckels 24 befindet sich eine Verhakungsausbildung 26 zum Einrasten in eine Öffnung 27 der Grundplatte 22.

Die Grundplatte 22 trägt auf ihrer dem Dachblech 14 zugewandten Seite einen daran angeformten, sich im wesentlichen parallel zur Grundplattenebene erstreckenden Haken 28. Die Grundplatte 22 weist neben dem Haken 28 eine Stecköffnung 29 auf, die zum Einhebeln des Flanschs 15 des Funktionskörpers 8 dient. Der Flansch 15 stützt sich auf einen Materialsteg 30, der an der Grundplatte 22 nach oben gerichtet angeformt ist, ab. Neben der Öffnung 29 befinden sich in der Grundplatte 22 noch zwei Bohrungen 31 für die Befestigungselemente 17.

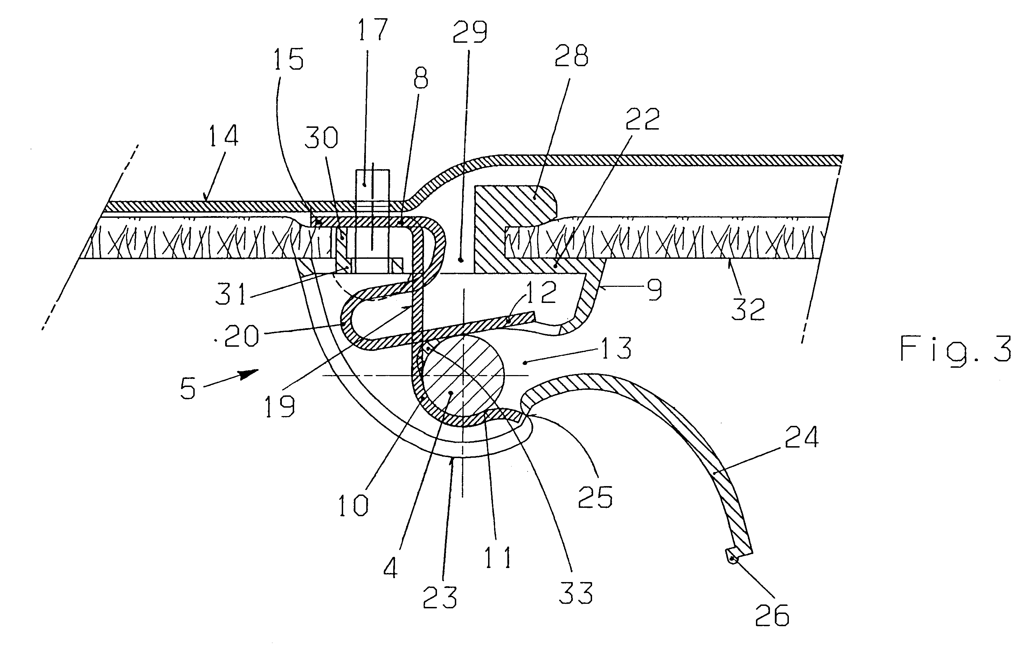

Das neue Gegenlagerböckchen 5 ist an einem mit einer entsprechenden Lochung versehenem Dachhimmel 32 vormontierbar. Hierfür wird zunächst der Haken 28 durch die Lochung gesteckt, um einen Lochungsrand, wie in Fig. 3 gezeigt, zu hintergreifen. Danach wird der Funktionskörper 8 in den Gehäusekörper 23 eingebracht und mit seinem Flansch 15 durch die Stecköffnung 29 und über den dem Haken 28 gegenüberliegenden Lochungsrand des Dachhimmels 32 gehebelt. Die bevorzugt sich ihr Gewinde als selbstschneidende Schrauben ausgeführten Befestigungselemente 17 werden hiernach durch die Bohrungen 31 der Grundplatte 22 gesteckt und in die Bohrungen 16 des Flanschs 15 des Funktionskörpers 8 eingeschraubt, wonach die Vormontage des neuen Gegenlagerböckchens an einem Dachhimmel 32 beendet ist. In gleicher oder auch ähnlicher Weise kann das Schwenklagerböckchen 3 am Dachhimmel 32 vormontiert und die Sonnenblende durch die Lagerböckchen 3 und 5 am Dachhimmel 32 gehalten werden. Nach dem Einbau des Dachhimmels 32 in ein Fahrzeug werden die Befestigungselemente 17 in im Dachblech 14 vorgesehene Bohrungen letztendlich eingedreht.

Für den Sonnenblendenkörper 1 wird zumindest eine Raststellung, in der sich der Sonnenblendenkörper 1 in seiner Nichtgebrauchslage in Himmelanlage befindet, durch das Gegenlagerböckchen 5 im Zusammenwirken mit dem Gegenlagerstift 4 erreicht. Der Gegenlagerstift 4 weist hierfür eine nockenartige Verdickung 33 auf, die sich über einen axialen Teilbereich des Gegenlagerstifts 4 erstreckt, tangential in den Gegenlagerstift 4 übergeht und bevorzugt mit dem zweiten Federschenkel 12 zusammenwirkt.

## Patentansprüche

1. Gegenlagerböckchen (5) für eine Fahrzeugsonnenblende mit zwei einen Gegenlagerstift (4) der Fahrzeugsonnenblende klammerartig umgreifenden Armen, deren einander zugewandten Seiten eine hinterschnittene Lageröffnung für den Gegenlagerstift (4) mit einem dessen wiederholtes Einstecken in die Lageröffnung ermöglichenden elastisch aufspreizbaren Einführschlitz (13) bilden, der etwa parallel zur Anlageebene des Gegenlagerböckchens (5) an einer Fahrzeugkarosserie bzw. einem Dachhimmel verläuft, wobei die Arme an einem aus Federstahlblech bestehenden Funktionskörper (8) ausgebildet sind, der innerhalb eines im Bereich des Einführschlitzes (13) offenen Gehäuses (9) angeordnet ist, dadurch gekennzeichnet, daß der Funktionskörper (8) zwei äußere, auf einer ersten Ebene liegende Federschenkel (10) mit hohlrunden Lageraufnahmen (11) und einen dazwischen angeordneten, auf einer zweiten Ebene liegenden Federschenkel (12) aufweist, die gemeinsam die hinterschnittene Lageröffnung und den elastisch aufspreizbaren Einführschlitz (13) bilden.

2. Gegenlagerböckchen (5) nach Anspruch 1, dadurch gekennzeichnet, daß der Funktionskörper (8) einen an der Fahrzeugkarosserie zur Anlage kommenden Flansch (15) aufweist, von dem drei nach unten abgebogene Stege (19, 20, 21) ausgehen, von denen die beiden äußeren zusammen mit dem Flansch (15) jeweils Z-förmig gestaltet sind, während der mittlere zusammen mit dem Flansch (15) nach Art eines Fragezeichens gestaltet ist.

3. Gegenlagerböckchen (5) nach Anspruche 2, dadurch gekennzeichnet, daß der Flansch (15) mit Öffnungen (16) für Befestigungselemente (17) versehen ist.

4. Gegenlagerböckchen (5) nach Anspruch 2 oder 3, dadurch gekennzeichnet, daß das aus einem Kunststoff-Spritzgußteil bestehende Gehäuse (9) eine gegen einen Dachhimmel (32) abstützbare Grundplatte (22), einen an der Grundplatte (22) angeordneten, den Dachhimmel durch eine Öffnung hindurch hintergreifenden Haken (28), einen hohlen Gehäusekörper (23) mit einer durch einen Deckel (24) verschließbaren Montageöffnung für den Funktionskörper (8), eine Öffnung (29) in der Grundplatte (22) zum Einhebeln des Flanschs (15) des Funktionskörpers (8) und Öffnungen in der Grundplatte (22) zum Durchführen von Befestigungselementen (17) aufweist, die in die Öffnungen (16) des Flanschs (15) des Funktionskörpers (8) wie auch in Bohrungen der Fahrzeugkarosserie einführbar sind.

5. Gegenlagerböckchen (5) nach Anspruch 4, dadurch gekennzeichnet, daß die Grundplatte (22) einen den Flansch (15) des Funktionskörpers (8) abstützenden Materialsteg (30) aufweist.

6. Gegenlagerböckchen (5) mit einer einen Gegenlagerstift (4) aufweisenden Sonnenblende für Fahrzeuge, wobei das Gegenlagerböckchen (5), zwei den Gegenlagerstift (4) klammerartig umgreifende Arme aufweist, deren einander zugewandten Seiten eine hinterschnittene Lageröffnung für den Gegenlagerstift (4) und einen dessen wiederholtes Einstecken in die Lageröffnung ermöglichenden elastisch aufspreizbaren Einführschlitz (13) bilden, der etwa parallel zur Anlageebene des Gegenlagerböckchens (5) an einer Fahrzeugkarosserie bzw. einem Dachhimmel verläuft, wobei die Arme an einem aus Federstahlblech bestehenden Funktionskörper (8) ausgebildet sind, der innerhalb eines im Bereich des Einführschlitzes (13) offenen Gehäuses (9) angeordnet ist, dadurch gekennzeichnet, daß der Funktionskörper (8) zwei äußere, auf einer ersten Ebene liegende Federschenkel (10) mit hohlrunden Lageraufnahmen (11) und einen dazwischen angeordneten, auf einer zweiten Ebene liegenden Federschenkel (12) aufweist, die gemeinsam die hinterschnittene Lageröffnung und den elastisch aufspreizbaren Einführschlitz (13) bilden und daß der Gegenlagerstift (4) über einen von den Armen umgriffenen Axialbereich eine unrunde Ausbildung aufweist.

7. Gegenlagerböckchen (5) mit einer einen Gegenlagerstift (4) aufweisenden Sonnenblende nach Anspruch 6, dadurch gekennzeichnet, daß der Gegenlagerstift (4) eine nockenartige Verdickung (33) aufweist, die sich über einen axialen Teilbereich des Gegenlagerstifts (4) erstreckt, die tangential in den Gegenlagerstift (4) übergeht und die mit dem zweiten Federschenkel (12) zusammenwirkt, um für den Sonnenblendenkörper (1) eine Raststellung zu definieren.

## Claims

1. Counter-bearing support (5) for a vehicle sun visor, having two arms which engage around a counter-bearing pin (4) of the vehicle sun visor in a clamp-like manner and of which the mutually facing sides form an undercut bearing opening for the counter-bearing pin (4) with an insertion slit (13) which allows repeated insertion of the counter-bearing pin into the bearing opening, can be spread apart elastically and runs approximately parallel to the plane in which the counter-bearing support (5) butts against a vehicle body or a roof lining, the arms being formed on a functional body (8) which consists of spring sheet steel and is arranged within a housing (9), which is open in the region of the insertion slit (13), characterized in that the functional body (8) has two outer resilient legs (10), which are located on a first plane and have round hollow bearing mounts (11), and a resilient leg (12), which is arranged between said resilient legs (10) and is located on a second plane, all the legs together forming the undercut bearing opening and the insertion slit (13), which can be spread apart elastically.

2. Counter-bearing support (5) according to Claim 1, characterized in that the functional body (8) has a flange (15) which comes into abutment against the vehicle body and from which there extend three downwardly bent lugs (19, 20, 21), of which the two outer lugs, together with the flange (15), are configured in a Z-shaped manner in each case, while the central lug, together with the flange (15), is configured in the manner of a question mark.

3. Counter-bearing support (5) according to Claim 2, characterized in that the flange (15) is provided with openings (16) for fastening elements (17).

4. Counter-bearing support (5) according to Claim 2 or 3, characterized in that the housing (9), which comprises a plastic injection moulding, has a base plate (22), which can be supported against a roof lining (32), a hook (28), which is arranged on the base plate (22) and, through an opening, engages behind the roof lining, a hollow housing body (23), which has an installation opening which can be closed by a cover (24) and is intended for the functional body (8), an opening (29) in the base plate (22), for the purpose of levering in the flange (15) of the functional body (8), and openings in the base plate (22) for the passage of fastening elements (17), which can be introduced into the openings (16) of the flange (15) of the functional body (8) and into bores of the vehicle body.

5. Counter-bearing support (5) according to Claim 4, characterized in that the base plate (22) has a material lug (30) which supports the flange (15) of the functional body (8).

6. Counter-bearing support (5) with a vehicle sun visor, which has a counter-bearing pin (4), it being the case that the counter-bearing support (5) has two arms which engage around the counter-bearing pin (4) in a clamp-like manner and of which the mutually facing sides form an undercut bearing opening for the counter-bearing pin (4) and an insertion slit (13) which allows the repeated insertion of the counter-bearing pin into the bearing opening, can be spread apart elastically and runs approximately parallel to the plane in which the counter-bearing support (5) butts against a vehicle body or a roof lining, the arms being formed on a functional body (8) which consists of spring sheet steel and is arranged within a housing (9), which is open in the region of the insertion slit (13), characterized in that the functional body (8) has two outer resilient legs (10), which are located on a first plane and have round hollow bearing mounts (11), and a resilient leg (12), which is arranged between said resilient legs (10) and is located on a second plane, all the legs together forming the undercut bearing opening and the insertion slit (13), which can be spread apart elastically, and in that the counter-bearing pin (4) has a non-round formation over an axial region around which the arms engage.

7. Counter-bearing support (5) with a sun visor, which has a counter-bearing pin (4), according to Claim 6, characterized in that the counter-bearing pin (4) has a cam-like thickened section (33) which extends over an axial sub-region of the counter-bearing pin (4), merges tangentially into the counter-bearing pin (4) and interacts with the second resilient leg (12) in order to define a latching position for the sun visor body (1).

## Revendications

1. Petit bloc de contre-palier (5) pour un pare-soleil de véhicule comportant deux bras entourant à la façon d'une pince une tige de contre-palier (4) du pare-soleil pour véhicule, bras dont les faces tournées l'une vers l'autre présentent une ouverture de tourillonnement dotée d'une contre dépouille pour la tige de contre-palier (4), avec une fente d'insertion (13) pouvant être ouverte élastiquement par écartement, permettant un enfichage répété dans la position d'ouverture, fente qui s'étend à peu près parallèlement par rapport au plan d'appui du petit bloc de contre-palier (5) sur une carrosserie de véhicule respectivement un habillage de plafond, les bras étant réalisés sur un corps fonctionnel (8) constitué d'une tôle en acier à ressort, qui est disposé à l'intérieur d'un boîtier (9) ouvert dans la zone de la fente d'insertion (13), caractérisé en ce que le corps fonctionnel (8) présente deux branches de ressort extérieures (10) situées sur un premier plan et ayant des logements de tourillonnement (11) ronds et creux et une branche de ressort (12) placée en position intermédiaire située dans un deuxième plan, les branches constituant conjointement l'ouverture de tourillonnement dotée d'une contre dépouille et la forme d'insertion (13) pouvant être ouverte élastiquement par écartement.

2. Petit bloc de contre-palier (5) selon la revendication 1, caractérisé en ce que le corps fonctionnel (8) présente un rebord (15) venant en appui de la carrosserie du véhicule, d'où partent trois pattes (19, 20, 21) repliées vers le bas dont les deux pattes extérieures ont, conjointement chaque fois avec le rebord (15), une forme en Z, tandis que la patte centrale a, conjointement avec le rebord (15), une forme en point d'interrogation.

3. Petit bloc de contre-palier (5) selon la revendication 2, caractérisé en ce que le rebord (15) est pourvu d'ouvertures (16) destinées à des éléments d'application (17).

4. Petit bloc de contre-palier (5) selon la revendication 2 ou 3, caractérisé en ce que le boîtier (9) constitué d'une pièce moulée par injection en matières plastiques présente une plaque de base (22) pouvant prendre appui contre un habillage de plafond (32), un crochet (28) disposé sur la plaque de basse (22), saisissant par l'arrière l'habillage de plafond en passant par une ouverture, un corps de boîtier (23) creux avec une ouverture de montage, pouvant être obturée par un couvercle (24) et destinée au corps fonctionnel (8), une ouverture (29) ménagée dans la plaque de base (22) destinée à introduire avec effet de levier le rebord (15) du corps fonctionnel (8) et des ouvertures ménagées dans la plaque de base (22) pour faire passer des éléments de fixation (17) qui peuvent être introduits dans les ouvertures (16) du rebord (15) du corps fonctionnel (8) tout comme également dans des perçages appartenant à la carrosserie du véhicule.

5. Petit bloc de contre-palier (5) selon la revendication 4, caractérisé en ce que la plaque de base (22) présente une nervure de matériau (30) soutenant le rebord (15) du corps fonctionnel (8).

6. Petit bloc de contre-palier (5) avec un pare-soleil présentant une tige de contre-palier (4), pour des véhicules, le petit bloc de contre-palier (5) présentant deux bras entourant la façon d'une pince la tige de contre-palier (4), dont les faces tournées l'une vers l'autre constituent une ouverture de tourillonnement dotée d'une contre dépouille pour la tige de contre-palier (4), et une fente d'insertion (13) pouvant être ouverte élastiquement par écartement, permettant son enfichage répété dans l'ouverture de tourillonnement, fente qui s'étend à peu près parallèlement au plan d'appui du petit bloc de contre-palier (5) sur une carrosserie de véhicule respectivement un habillage de toit, les bras étant réalisés sur un corps fonctionnel (8) constitué d'une tôle en acier à ressort, et disposé à l'intérieur d'un boîtier (9) ouvert, dans la zone de la fente d'insertion (13), caractérisé en ce que le corps fonctionnel (8) présente deux branches de ressort extérieures (10) situées sur un premier plan et ayant des logements de tourillonnement (11) ronds creux et une branche de ressort (12) située en position intermédiaire située dans un deuxième plan, constituant conjointement l'ouverture de tourillonnement dotée d'une contre dépouille et la forme d'insertion (13) pouvant être ouverte élastiquement par écartement, et en ce que la tige de contre-palier (4) présente une configuration non ronde sur une zone axiale entourée par les bras.

7. Petit bloc de contre-palier (5) avec un pare-soleil présentant une tige de contre-palier (4) selon la revendication 6, caractérisé en ce que la tige de contre-palier (4) présente un épaississement (33) du genre d'une came qui s'étend sur une zone partielle axiale de la tige de contre-palier (4), qui se transforme tangentiellement la tige de contre-palier (4) et qui coopère avec la deuxième branche de ressort (12) afin de définir une position d'encliquetage pour le corps de paresoleil (1).
